# EUROPÄISCHE PATENTSCHRIFT

(11) **EP 1 197 400 B1**
(45) Veröffentlichungstag und Bekanntmachung des Hinweises auf die Patenterteilung: **17.12.2003**
(21) Anmeldenummer: 01122600.8
(22) Anmeldetag: 26.09.2001
(51) Int. Cl.: B60R 21/16, B60R 21/26

(54) **Seitengassackmodul**
Side air bag module
Module d'airbag latéral

(30) Priorität: 27.09.2000 DE 20016717 U
(43) Veröffentlichungstag der Anmeldung: 17.04.2002
(73) Patentinhaber: TRW Occupant Restraint Systems GmbH & Co. KG, 73553 Alfdorf (DE)
(72) Erfinder: Fischer, Anton, 73579 Leinweiler (DE)
(74) Vertreter: Kitzhofer, Thomas, Dipl.-Ing.

(56) Entgegenhaltungen:
- EP-B- 0 694 444
- DE-A- 19 848 794
- DE-U- 29 905 770

## Beschreibung

Die Erfindung betrifft ein Seitengassackmodul gemäß dem Oberbegriff des Anspruchs 1.

Seitengassäcke, sogenannte Window Bags, werden oft zu einem langgestreckten Paket zusammengefaltet und entlang einer Dachkontur eines Fahrzeugs angeordnet. Ein Gasgenerator, der im Rückhaltefall Gas zum Aufblasen des Gassacks liefert, kann am vorderen oder am hinteren Ende des Pakets angeordnet sein. Diese Technik wird vor allen Dingen für Gassäcke angewandt, die sich in etwa von der A- bis zur C-Säule des Fahrzeugs erstrecken und mehr oder weniger den gesamten Bereich der Seitenscheiben abdecken. Solche Gassäcke weisen entweder eine große Rückhaltekammer oder aber mehrere, nebeneinander angeordnete Rückhaltekammern auf.

Das Gas muß vom Gasgenerator weite Wege zurücklegen, um das vom Gasgenerator abgewandte Ende des Gassacks zu erreichen. Um die Aufblaszeit des Gassacks zu verkürzen und um das Gassackgewebe vor hohen Belastungen durch das heiße, unter hohem Druck stehende Gas zu schützen, werden Gaslanzen aus Metall eingesetzt, die sich durch den Gassack ziehen und das entlegene Ende des Gassacks oder eine weitere Rückhaltekammer befüllen. Diese Gaslanze muß vor dem Falten des Gassacks in diesen eingebracht werden, was die Herstellung verteuert.

Es ist auch bekannt, einen Gasgenerator in der Mitte eines Gassackmoduls mit einem schlauchförmig zusammengefalteten Gassacks anzuordnen. Der Gasgenerator weist Gasführungen auf, die jeweils mit einzelnen Rückhaltekammern des Gassacks verbunden sind. Da der Gasgenerator innerhalb des schlauchförmigen Gassackpaketes liegt, muß dieser vor dem Falten des Gassacks eingebracht werden, was die Faltung des Gassacks aufwendig macht.

In der DE-A 198 48 794 ist ein im zusammengelegten Zustand langgestreckter Seitengassack gezeigt, der z.B. an einem Dachrahmen befestigt ist. Der Gasgenerator ist in eine längs des oberen Rands des Gassack verlaufende, aus Gassackgewebe gebildete Gasleitung eingesetzt. Das erzeugte Gas wird über die Gasleitung auf mehrere Rückhaltekammern verteilt. Auf der zum Dachrahmen gerichteten Seite ist der gefaltete Gassack durch eine Flies- oder Papierlage abgedeckt, während er an der zum Fahrzeuginnenraum gerichteten Seite an einem Innenraumverkleidungsteil anliegt..

Aufgabe der Erfindung ist es, ein kostengünstiges Gassackmodul vorzustellen.

Dies wird bei einem gattungsgemäßen Seitengassackmodul durch die Merkmale des Anspruchs 1 erreicht. Der Gassack kann ohne das Einlegen eines Gasgenerators oder einer Gaslanze gefaltet werden. Nach der Faltung wird der Gassack in eine Schutzhülle verpackt, so daß ein schlauchförmiges Paket entsteht. Die Anschlüsse des Gassacks sind nicht an den Längsenden von Gassack und Schutzhülle, sondern zwischen den Längsenden aus der Schutzhülle herausgeführt. Der Gassack ist über die Anschlüsse und die Gasführungen mit dem Gasgenerator verbunden, so daß der Gasgenerator nicht von einem Längsende aus den Gassack aufblasen muß. Es ist günstig, wenn die Anschlüsse dicht beieinander liegen und möglichst kurz sind. Über die Anschlüsse werden schnell verschiedene Abschnitte des Gassacks aufgeblasen.

Vorzugsweise sind in der Schutzhülle Schlitze vorgesehen. Durch diese Schlitze werden die Anschlüsse des Gassacks herausgeführt, um mit den Gasführungen verbunden zu werden. Die Schlitze bilden so kleine Öffnungen, daß der Gassack trotzdem vor Verschmutzung und Beschädigung geschützt ist.

Vorzugsweise bildet der Gassack im zusammengelegten Zustand ein schlauchförmiges Gassackpaket, und die Anschlüsse und der Gasgenerator sind, quer zur Längsrichtung gesehen, nahe der Mitte des Pakets angeordnet. Auf diese Weise kann ein Gasgenerator vorzugsweise oberhalb oder unterhalb des zusammengelegten Gassacks angebracht werden, z.B. im Bereich der B-Säule des Fahrzeugs. Die Wege, die das Gas zur Befüllung des Gassacks zurückzulegen hat, sind kurz, und die Aufblaszeit verringert sich.

Die Anschlüsse münden vorzugsweise in unterschiedliche Rückhaltekammern des Gassacks. Da jeder Anschluß einer Gasführung des Gasgenerators zugeordnet ist, läßt sich eine Aufteilung der Gasströme in die Rückhaltekammern erreichen, so daß eine gezielte Befüllung unterschiedlich großer Kammern möglich ist. Außerdem wird durch die Aufteilung des Gasstroms auf zwei Anschlüsse die Belastung des Gassackgewebes reduziert. Auf eine Gaslanze kann verzichtet werden.

Um eine gleichmäßige Verteilung des Gases auf die Anschlüsse zu gewährleisten, kann der Gasgenerator einen Ausgleichsraum aufweisen, der mit den Gasführungen verbunden ist. In diesem Fall strömt das Gas vom Gasgenerator zunächst in den Ausgleichsraum und von dort in die Gasführungen, wodurch gewährleistet ist, daß der Druck vor beiden Gasführungen identisch ist.

Eine weitere Aufgabe der Erfindung ist es, einen Gassack schnell, einfach und kostengünstig zu befüllen.

Dies wird bei einem eingangs genannten Gassackmodul dadurch erreicht, daß beide Anschlüsse in dieselbe Rückhaltekammer münden. Durch die Aufteilung auf zwei Anschlüsse läßt sich ein großes Gasvolumen schnell in die Kammer leiten, ohne daß das die Einlaßöffnung umgebende Gassackgewebe zu stark strapaziert würde.

Ein weiterer Vorteil besteht darin, daß sich der Gasstrom durch die Wahl des Winkels, unter dem die Anschlüsse in den Gassack münden, gezielt in die Kammer richten läßt. Besonders günstig ist es, wenn die Anschlüsse in einem stumpfen Winkel in die Rückhaltekammer münden. Dies kann eine schnelle Entfaltung des Gassacks bewirken, da der Gasstrom auf einer breiten Fläche auf den zusammengelegten Gassack auftrifft.

Der Gasgenerator und die Anschlüsse sind bevorzugt mittig zum zusammengelegten Gassack angeordnet, so daß eine Gaslanze entfallen kann.

Vorzugsweise weist der Gasgenerator einen Ausgleichsraum auf, der init den Gasführungen verbunden ist, um zu gewährleisten, daß der Gasdruck in beiden Anschlüssen gleich ist.

Weitere Merkmale der Erfindung ergeben sich aus den Unteransprüchen.

In der nachfolgenden Beschreibung sind Ausführungsbeispiele mit Bezug auf die beigefügten Zeichnungen näher beschrieben. In den Zeichnungen zeigen:
- Figur 1 ein erfindungsgemäßes Seitengassackmodul im zusammengelegten Zustand des Gassacks;
- Figur 2 eine Teilansicht eines erfindungsgemäßen Seitengassackmoduls;
- Figur 3 a eine Teilansicht eines erfindungsgemäßen Seitengassackmoduls gemäß einer ersten Ausführungsform; und

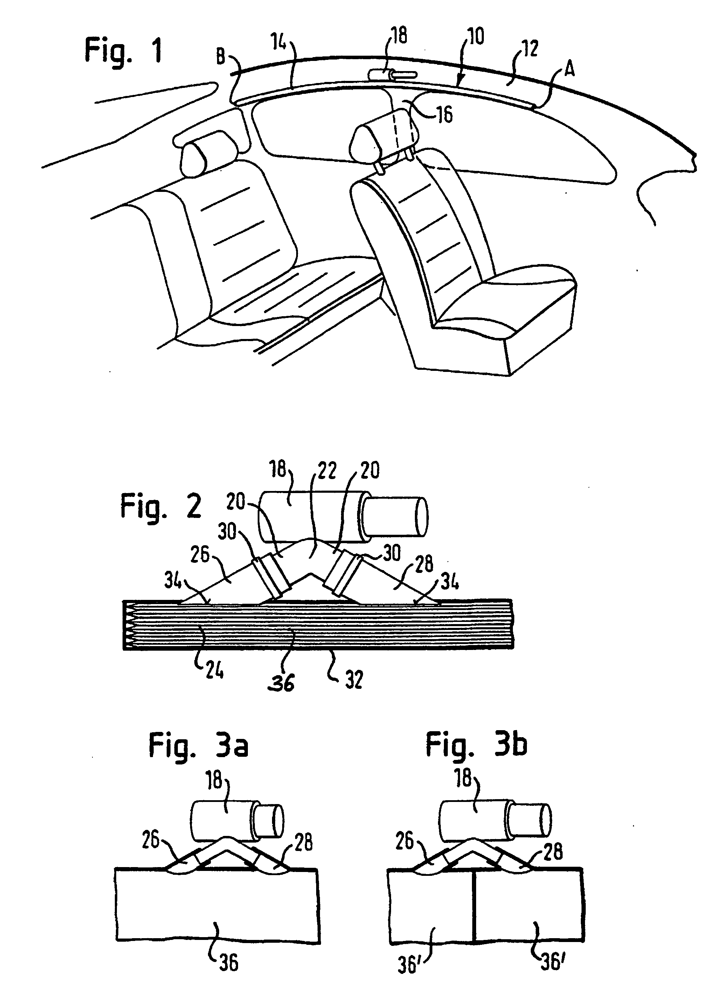

- Figur 3 b eine Teilansicht eines erfindungsgemäßen Gassackmoduls gemäß einer zweiten Ausführungsform.

Figur 1 zeigt ein erfindungsgemäßes Seitengassackmodul 10 im zusammengelegten Zustand des Gassacks, angeordnet entlang einer Dachkontur 12 eines Fahrzeugs. Der Gassack ist zu einem schlauchförmigen Paket 14 zusammengelegt (in Figur 2 angeschnitten gezeigt), das zwei Längsenden A, B aufweist. Im Bereich der B-Säule 16, etwa auf der Hälfte der Längserstreckung des Gassackpakets 14, ist ein Gasgenerator 18 befestigt. Der Gasgenerator 18 ist direkt oberhalb des Gassackpakets 14 angebracht und dient bei einem Unfall dazu, den Gassack mit Druckgas zu befüllen. Der Gasgenerator 18 kann ein pyrotechnischer Gasgenerator oder eine sonstige Druckgasquelle sein.

Wie in Figur 2 zu erkennen ist, weist der Gasgenerator 18 zwei vorzugsweise stabile, rohrförmige, kurze Gasführungen 20 auf Die Gasführungen 20 können mit dem Gasgenerator 18 über einen Ausgleichsraum 22 verbunden sein und stehen in stumpfem Winkel vom Gehäuse des Gasgenerators 18 ab.

Der Gassack 24 weist zwei kurze Anschlüsse 26 und 28 in Form von Fortsätzen der gezeigten Gassackwand aus Gewebematerial auf, die schlauchförmig ausgebildet sind und in einem stumpfen Winkel vom oberen Rand des Gassacks abstehen. Die Anschlüsse 26, 28 sind in Längsrichtung des Gassacks gesehen etwa in der Mitte des Gassacks mit kurzem Abstand nebeneinander angeordnet. Die Anschlüsse 26, 28 sind mit den Gasführungen 20 z.B. über Schlauchschellen 30 verbunden.

Der zusammengelegte Gassack 24 ist vollständig von einer Schutzhülle 32 umgeben, die z.B. aus einer stabilen Kunststoffolie bestehen kann und den Gassack vor Verschmutzung und Beschädigung schützt. Die Schutzhülle besitzt ebenfalls Längsenden an den Stellen A und B. In der Schutzhülle 32 sind Schlitze 34 vorgesehen, durch die die Anschlüsse 26, 28 aus der Schutzhülle 32 hinausgeführt sind.

Beim Zusammenbau des Gassackmoduls 10 wird der Gassack 24 gefaltet und in den Schutzschlauch 32 eingezogen. Anschließend wird der Schutzschlauch 32 mit den Schlitzen 34 versehen. Die Anschlüsse 26, 28 werden durch die Schlitze 34 gezogen und mit den Gasführungen 20 des Gasgenerators 18 durch die Schlauchschellen 30 gasdicht verbunden. Schließlich wird das Gassackmodul 10 im Bereich des Fahrzeugdaches montiert.

Gemäß einer in Figur 3a dargestellten Ausführungsform weist der Gassack 24 eine große Rückhaltekammer 36 auf, in die beide Anschlüsse 26, 28 münden.

In der in Figur 3b gezeigten Ausführungsform besitzt der Gassack 24 zwei nebeneinander angeordnete Rückhaltekammern 36', und die Anschlüsse 26, 28 münden in unterschiedlichen Rückhaltekammern.

Die Gasführungen 20 können, müssen aber nicht zwingend außerhalb der Rückhaltekammer oder -kammern enden, vielmehr können die Gasführungen 20 durch z.B. ein Rohr, einen Schlauch oder eine Gewebehülle verlängert werden und sich in die Rückhaltekammer oder -kammern erstrecken, um die Gasströme gezielter zu lenken. Die Verlängerungen können am gassackseitigen Ende eine Ausströmöffnung und/oder über die Länge verteilte Öffnungen haben.

## Patentansprüche

1. Seitengassackmodul, mit einem Gasgenerator (18) und einem Gassack (24) zum Abdecken wenigstens einer Seitenscheibe, wobei der Gassack (24) wenigstens eine Rückhaltekammer (36; 36') und im gefalteten Zustand eine langgestreckte Gestalt hat, **dadurch gekennzeichnet, daß** der Gasgenerator (18) wenigstens zwei Gasführungen (20) und der Gassack (24) wenigstens zwei durch Fortsätze der Gassackwand gebildete Anschlüsse (26, 28) aufweist, die mit den Gasführungen verbunden sind, und daß der Gassack (24) im gefalteten Zustand von einer Schutzhülle (32) umgeben ist und die Anschlüsse (26, 28) zwischen Längsenden der Schutzhülle (32) aus der Schutzhülle (32) herausragen.

2. Gassackmodul nach Anspruch 1, **dadurch gekennzeichnet, daß** der Gassack (24) im zusammengelegten Zustand ein langgestrecktes Paket (14) bildet und daß die Anschlüsse (26, 28) und der Gasgenerator (18) quer zur Längsrichtung gesehen nahe der Mitte des Pakets (14) angeordnet sind.

3. Gassackmodul nach einem der vorhergehenden Ansprüche, **dadurch gekennzeichnet, daß** der Gasgenerator (18) oberhalb oder unterhalb des zusammengelegten Gassacks (24) angeordnet ist.

4. Gassackmodul nach einem der vorhergehenden Ansprüche, **dadurch gekennzeichnet, daß** in der Schutzhülle (32) wenigstens ein Schlitz (34) vorgesehen ist, durch den sich die Anschlüsse (26, 28) erstrecken.

5. Gassackmodul nach einem der vorhergehenden Ansprüche, **dadurch gekennzeichnet, daß** der Gasgenerator (18) einen Ausgleichsraum (22) aufweist, der mit den Gasführungen (20) verbunden ist.

6. Gassackmodul nach einem der vorhergehenden Ansprüche, **dadurch gekennzeichnet, daß** die Anschlüsse (26, 28) in einem stumpfen Winkel in die Rückhaltekammer (36; 36') münden.

7. Gassackmodul nach einem der vorhergehenden Ansprüche, **dadurch gekennzeichnet, daß** beide Anschlüsse (24, 26) in dieselbe Rückhaltekammer (36) münden.

## Claims

1. A side gas bag module, comprising a gas generator (18) and a gas bag (24) for covering at least one side window, the gas bag (24) having at least one retention chamber (36; 36') and an elongated shape in the folded condition, **characterized in that** the gas generator (18) includes at least two gas conduits (20) and the gas bag (24) includes at least two connections (26, 28) which are formed by projections of the gas bag wall and are connected with the gas conduits, and that in the folded condition the gas bag (24) is surrounded by a protective cover (32) and the connections (26, 28) project from the protective cover (32) between longitudinal ends of the protective cover (32).

2. The gas bag module as claimed in claim 1, **characterized in that** in the folded condition the gas bag (24) forms an elongated package (14), and that the connections (26, 28) and the gas generator (18) are disposed close to the middle of the package (14) as viewed transversely to the longitudinal direction.

3. The gas bag module as claimed in either of the preceding claims, **characterized in that** the gas generator (18) is disposed above or below the folded gas bag (24).

4. The gas bag module as claimed in any of the preceding claims, **characterized in that** the protective cover (32) has at least one slot (34) provided therein, through which the connections (26, 28) extend.

5. The gas bag module as claimed in any of the preceding claims, **characterized in that** the gas generator (18) has a compensating chamber (22) which is connected with the gas conduits (20).

6. The gas bag module as claimed in any of the preceding claims, **characterized in that** the connections (26, 28) open into the retention chamber (36; 36') at an obtuse angle.

7. The gas bag module as claimed in any of the preceding claims, **characterized in that** both connections (24, 26) open into the same retention chamber (36).

## Revendications

1. Module de coussin à gaz latéral, comportant un générateur de gaz (18) et un coussin à gaz (24) pour recouvrir au moins une fenêtre latérale, le coussin à gaz (24) ayant au moins une chambre de retenue (36 ; 36') et une forme allongée à l'état replié, **caractérisé en ce que** le générateur de gaz (18) présente au moins deux conduites de gaz (20) et **en ce que** le coussin à gaz (24) présente au moins deux raccordements (26, 28) qui sont formés par des prolongements de la paroi du coussin à gaz et reliés aux conduites de gaz, et **en ce qu'**à l'état replié, le coussin à gaz (24) est entouré par une enveloppe de protection et les raccordements (26, 28) entre les extrémités longitudinales de l'enveloppe de protection (32) font saillie hors de l'enveloppe de protection (32).

2. Module de coussin à gaz selon la revendication 1, **caractérisé en ce qu'**à l'état replié, le coussin à gaz forme un paquet (14) allongé et **en ce que** les raccordements (26, 28) et le générateur de gaz (18) sont agencés près du milieu du paquet, vu transversalement à la direction longitudinale.

3. Module de coussin à gaz selon l'une des revendications précédentes, **caractérisé en ce que** le générateur de gaz (18) est agencé au-dessus ou au-dessous du coussin à gaz replié (24).

4. Module de coussin à gaz selon l'une des revendications précédentes, **caractérisé en ce que** dans l'enveloppe de protection (32) est prévue au moins une fente (34) à travers laquelle s'étendent les raccordements (26, 28).

5. Module de coussin à gaz selon l'une des revendications précédentes, **caractérisé en ce que** le générateur de gaz (18) présente une chambre de compensation (22) qui est reliée aux conduites de gaz (20)

6. Module de coussin à gaz selon l'une des revendications précédentes, **caractérisé en ce que** les raccordements (26, 28) débouchent sous un angle obtus dans la chambre de retenue (36 ; 36').

7. Module de coussin à gaz selon l'une des revendications précédentes, **caractérisé en ce que** les deux raccordements (26, 28) débouchent dans la même chambre de retenue (36).
